# EUROPEAN PATENT SPECIFICATION

(11) **EP 2 712 706 B1**
(45) Date of publication and mention of the grant of the patent: **24.06.2015**
(21) Application number: 13180993.1
(22) Date of filing: 20.08.2013
(51) Int. Cl.: B24C 1/04, B24C 3/32

(54) **Machining of an article**
Bearbeitung eines Artikels
Usinage d'un article

(30) Priority: 26.09.2012 GB 201217158
(43) Date of publication of application: 02.04.2014
(73) Proprietor: Rolls-Royce plc, London SW1E 6AT (GB)
(72) Inventor: Chan, Ka Him, Derby DE22 3NL (GB); Wilson, Matthew, Narberth SA67 8SY (GB); Xi, Zhidong, 045000 Shanxi Province (CN); Hu, Haolei, 201204 Shanghai (CN)
(74) Representative: Roberts, Nicholas John

(56) References cited:
- WO-A2-2009/112945
- GB-A- 2 350 809
- GB-A- 2 454 187

## Description

### Technical Field of Invention

The invention relates to machining of an article and particularly to machining a leading edge on an aerofoil using a fluid jet.

### Background of Invention

Aerofoils are used to turn flow of a fluid and have a leading edge, a trailing edge and suction and pressure flanks that connect the leading and trailing edges. The leading edge is generally narrow and its profile can affect the flutter margin of the aerofoil.

Leading edges generally approximate a circle but more recently in the field of gas turbines the leading edge can have an elliptical profile. The aerofoil leading edges can become worn or damaged in use and may require re-dressing back to an aerodynamically acceptable profile.

Since every aerofoil will wear at a different rate it is difficult to automatically determine machine tool paths and the leading edges are therefore typically hand dressed. Hand dressing requires skilled workers and has a risk of manual handling or machining errors that could cause the blade to be irreparable.

In one application GB 2454187 there is described a machining apparatus that uses a water jet to machine a leading edge. The water jet is fixed in an axiostatic direction and by suitable simultaneous axial rotational and transverse manipulation of the aerofoil within the fixed and static water jet stream it is possible to machine the leading edge to a desired profile. The water jet is used to roughen out the shape the prior to the application of a chip machining or grinding process.

It is an object of the present invention to seek to provide an improved method of water jet machining a leading edge that does not require additional chip machining or grinding.

### Statements of Invention

According to a first aspect of the invention there is provided a method of forming a curved profile of an edge on an aerofoil, the curve having a profile axis, the method comprising: providing an aerofoil having an edge extending along a length; providing a fluid jet that has a Gaussian energy distribution profile; traversing the fluid jet along a path that substantially follows the length of the edge to machine an edge having the curved profile, the maximum energy of the fluid jet being directed to a location offset from the profile axis.

Preferably the Gaussian energy distribution is a normal energy distribution profile. Advantageously, the shape of the leading edge may be determined by the Gaussian energy distribution of the fluid jet and the energy distribution. The energy distribution may be selected to provide an elliptical leading edge with a ratio of the major axis to the minor axis of 3:1 or more. Preferably the ratio of the major axis to the minor axis is 4:1 to 7:1 or more.

The offset may be constant along the length of the axis so that the jet follows a linear traverse.

The leading edge profile preferably transitions into a suction flank at one side and into a pressure surface at the other side and follows an elliptical curve, the maximum width of the leading edge in a direction perpendicular to the axis being equal to the minor axis of the ellipse, the offset being greater than or equal to the minor radius of the ellipse. The ratio of the major axis to the minor axis may be between 1:1 and 8:1. The profile axis may be the major axis of the ellipse.

The fluid jet may comprise abrasive particles, which may be in grit or bead form and selected from the group comprising glass, garnet, or aluminium, silicon or boron based ceramics or a mixture thereof. Particle sizes in the range between 4 and 600 microns may be used.

Preferably the abrasive particles are added to the fluid jet at a rate of between 15 and 55 g/min, and more preferably between 15 and 35 g/min.

The fluid jet may have an axis that is directed towards a tangent of the ellipse. The angle of the fluid jet axis to the major axis of the ellipse may be constant as the fluid jet traverses along the path.

The traverse of the fluid jet may be followed by traverse of a second fluid jet at a higher or lower traverse speed and a lower stand-off to the leading edge. The maximum energy of the second fluid jet is preferably directed to a location that has a greater offset from the axis than the first fluid jet.

The fluid may be water. The edge may be a leading edge.

### Brief Description of the Drawings

Fig. 1 depicts a jet head presented to a leading edge of an aerofoil;
Fig. 2 depicts an exemplary energy distribution of the jet of Fig. 1;
Fig. 3 shows a perspective view of an aerofoil with an elliptical leading edge;
Fig. 4 depicts a jet head presented to a leading edge of an aerofoil at an offset L to the major axis of the elliptical leading edge;
Fig. 5 shows a two stage machining process for a leading edge;
Fig. 6 depicts a machining arrangement that simultaneously emits jets to the opposing sides of the leading edge;
Fig. 7 shows a jet head angled towards the tangent of the leading edge profile;
Fig 8 shows a jet head angled relative to the length of the leading edge.

### Detailed Description of Invention

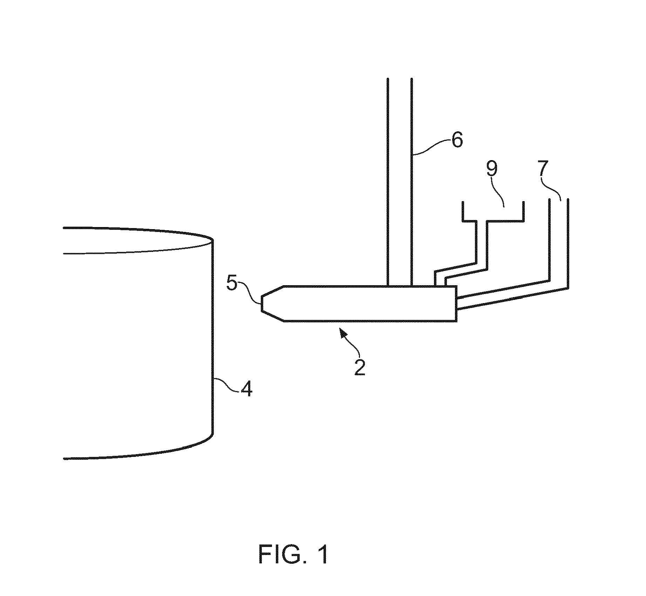

Figure 1 depicts a jet head 2 that is presented to an aerofoil leading edge 4. The jet head has a focussing tube mounted to a clamp 6 that is capable of moving along three axes x,y,z. The focussing tube is made of a hard material, preferably tungsten carbide, which resists wear from the high pressure fluid the flows through the focussing tube and which is emitted from an aperture at the end thereof.

The fluid projected from the aperture is preferably water as the fluid is cheap and readily available; but it will be appreciated that other fluids may also be used. For the rest of the specification the term "water" will be used, but this term should be understood to include any other suitable fluid. The water may, and preferably, include hard particles that assist in the machining process.

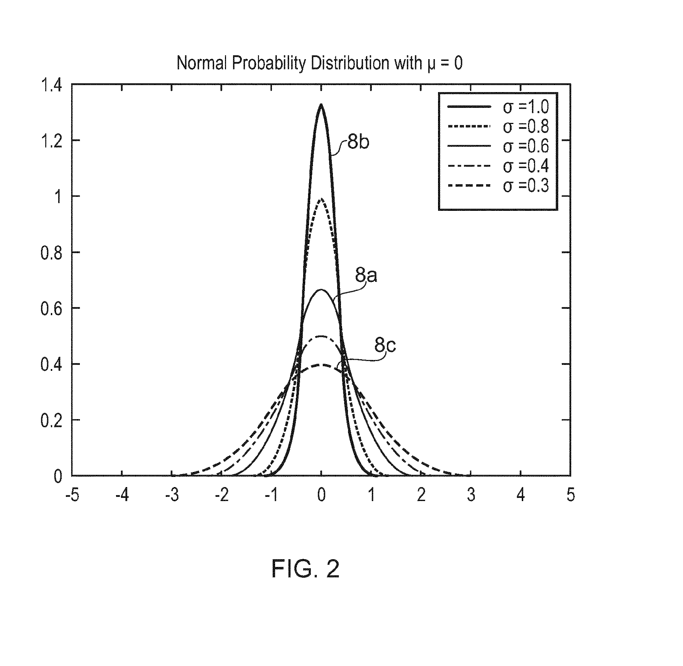

An orifice 5 of 0.004 inches (0.1016 mm) is used to eject jet from a water pressure of around 3800 bar (55,000psi) supplied from a pressurised source 7. Using a 0.004" (0.1016mm) orifice in the nozzle results in a fine and narrow jet with a very concentrated energy distribution towards the centre and which follows the Gaussian normal distribution 8a shown in Figure 2. The size of the orifice is selected to provide an energy fall off that is balanced to the alignment accuracy of the water jet and a flow that follows σ=0.6 is preferred. A smaller orifice diameter, preferably above 0.001 inches (0.0254mm), gives a sharper energy fall-off that follows the line 8b. The sharper energy fall of can make it harder to align the jet to machine a desired profile, but can achieve a high ratio ellipse. A larger orifice diameter, preferably below 0.1 inches (2.54mm), provides an energy distribution 8c that has a shallower fall off that, for the provision of a leading edge profile, may not be able to give an ellipse with a sufficiently high ratio.

The focussing tube traditionally has a circular cross-section and is straight along its axis but may have other shapes e.g. elliptical, semi-circular, semi-elliptical, rectangular, square, diamond or triangular. The shape of the tube along the axis may also be selected to vary along the axis to have a converging, diverging, converging-diverging, or venture profile, as appropriate. The actual shape chosen is dependent on cost, manufacturability and the desired energy distribution of the jet.

Due to the relatively high fall off in the energy of the jet from its centre point the stand-off distance between the leading edge and the orifice is selected to be around 20mm though appropriate results were achieved with stand-offs of between 5mm and 40mm. The stand-off to the test piece is a major influential factor and is tightly controlled by the position of the clamp and thereby the jet head. At shorter distances it is possible to create a sharper profile but the risk of impaired operation is increased due to an atomisation of the jet that can cause abrasive particles in a particle hopper to agglomerate and block the orifice.

For the material of the leading edge of an aerofoil, typically titanium or some other metal, the presence of an abrasive is desirable to ensure that machining occurs at an appropriate rate. Suitable materials for the abrasive, in grit or bead form, are glass, garnet, or aluminium, silicon or boron based ceramics or a mixture thereof supplied from a hopper 9. Other hard particles may also be used. The particles must be suitable sized to pass through the orifice or focussing tube without blocking. Accordingly, particle sizes in the range between 4 and 600 microns are preferred.

The concentration of the particles in the water jet can be varied dynamically, but more preferably is a static value selected before the start of machining. The feedrate is measured in grams per minute and can be between 0 g/m and 60 g/min. However, for the provision of a leading edge with an elliptical profile a low feed rate of between 15 and 55g/min is preferred. A feed rate between 15g/min and 35g/min gave an ellipse with an ratio ellipse between 2:1 and 8:1. It was found to be possible to produce a high ratio ellipse between 6:1 and 8:1 at a feed rate of around 17g/min.

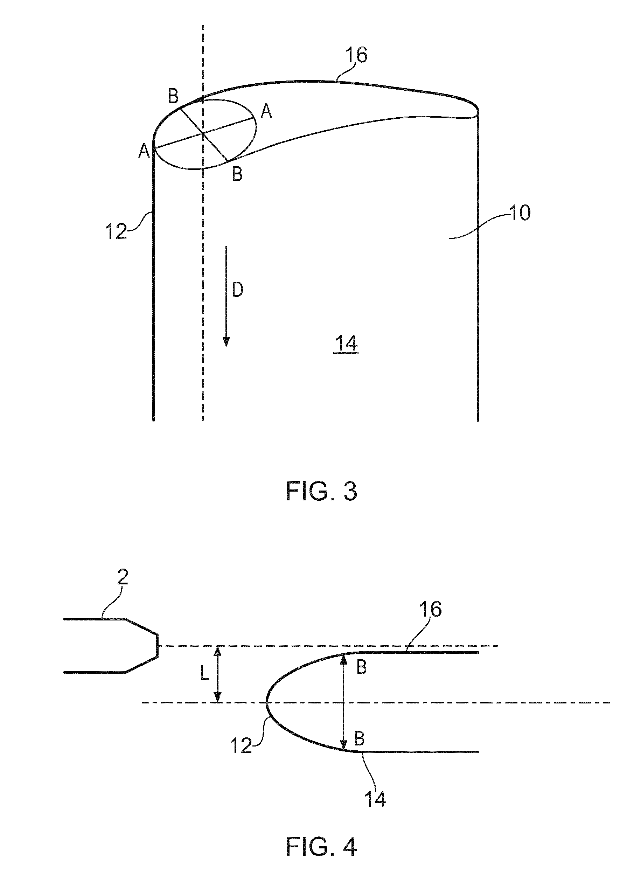

A leading edge profile of an aerofoil is depicted in Figure 3. The aerofoil 10 is a rotatable blade or static vane found in a gas turbine engine. The specific blade shown is a fan blade in the fan stage of the gas turbine. Fan blades may be impacted in use by foreign objects such as dust, ice, birds etc. which can erode or damage the leading edge 12. The profile of the leading edge is important as it conditions the flow over the aerofoil and helps, in part, to define both the surge and flutter margins of the aerofoil and consequently defines the stable operating window of the aerofoil.

The leading edge 12 of the aerofoil connects the suction surface 14 to the pressure surface 16. The leading edge is circular or elliptical in form with the ellipse having a major axis A-A and a minor axis B-B. Where the leading edge is circular the major and minor axes are in the ratio 1:1. High ratio ellipses in the range 4:1 to 8:1 for the major:minor axis ratios are desirable. The minor axis signifies the point of transition between the leading edge and the suction and pressure surfaces.

Figure 4 depicts a first arrangement of a nozzle presented to a schematic of an aerofoil leading edge. The nozzle directs the water towards the aerofoil such that it is incident onto the leading edge and is then directed over the suction and pressure flanks. It is desirable to protect the suction and pressure flanks with a shield that is sealed to or coated to the flanks. The shield is particularly important as the jet is directed towards the leading edge at a location that is offset from the major axis. The offset L may be less than the radius of the minor axis but is more preferably equal to or greater than the radius of the minor axis.

Advantageously, the offset allows the natural Gaussian energy distribution to at least partially control the machined leading edge profile. An offset of equal to or greater than the radius of the minor axis is of particular importance where a minimum of wear at the leading edge point is required.

To form the leading edge the aerofoil is aligned to the nozzle and the water jet started. The jet is then moved to bring it into contact with the aerofoil leading edge and then traversed in the direction of arrow D along the length of the leading edge. In some circumstances it is desirable to repeat the traverse in a multipass approach. The position of the nozzle relative to the leading edge can be varied between the passes to increase the window of possible profiles that may be produced. The positional variation may include one or more of the stand-off distance or the offset.

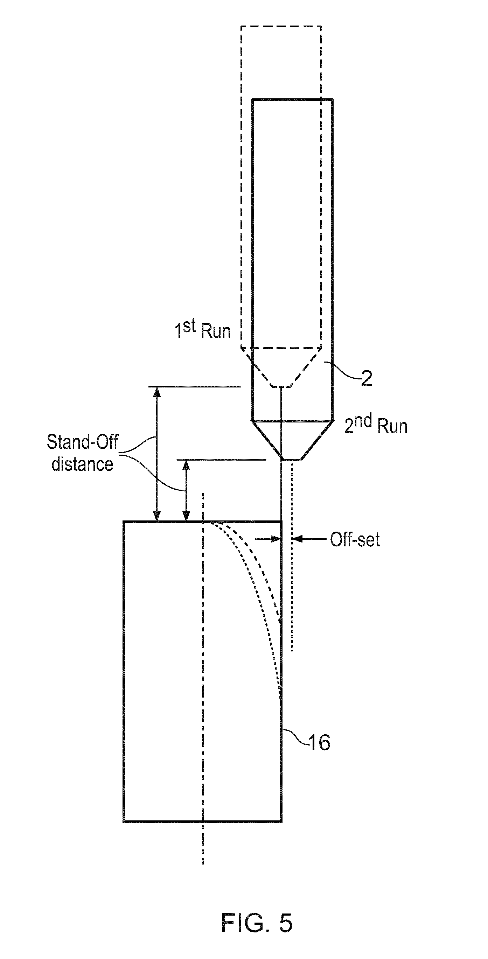

Figure 5 depicts a two stage process that involves a first fast roughing cut followed by a slower finishing cut to produce profile equivalent to that produced in a single pass but in much less cycle time compared with a single stage process. The process enables leading edge ellipses at ratios of 4:1 or greater to be formed using a first pass at a stand-off distance of 20mm between the nominal leading edge and the jet nozzle and a fast traverse speed of 1000mm/hr or more, and reducing the stand-off distance, traverse speed and increasing the offset for the second pass. The increased offset in the second pass helps to prevent the tip of the ellipse that was formed in the first pass being eroded during the subsequent pass. It was found that by using the two stage approach it was possible to create a high ratio ellipse at up to 25 times faster than using a single stage approach.

The traverse speed along the leading edge is between 0.005" (0.127mm) per minute to up to 10" (254mm) per minute. It has been found that the traverse speed has little effect on the elliptical ratio, but a slower traverse speed marginally increases the ratio. Increasing the head speed reduces the machining time but also removes less material an increase in abrasive concentration may be used to offset the reduction in material removal.

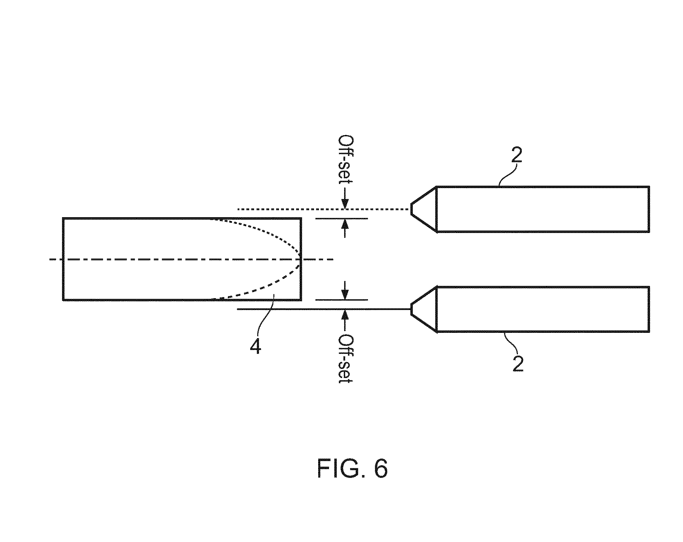

Further machining time savings may be achieved by simultaneously machining both sides of the leading edge as shown in Figure 6. A second water jet head is provided to create the full leading edge profile in the single, or multi-pass approach described above. The symmetry of the profile is sensitive to the offset value and therefore aligning the two water jets relative to one another in a semi permanent relationship can reduce the set up time of the apparatus.

As discussed above a loss of material at the leading edge point can be reduced by increasing the offset in the x-direction which ensures that, due to the Gaussian energy distribution of the jet, the jet has relatively low energy at the point of impact with the leading edge point.

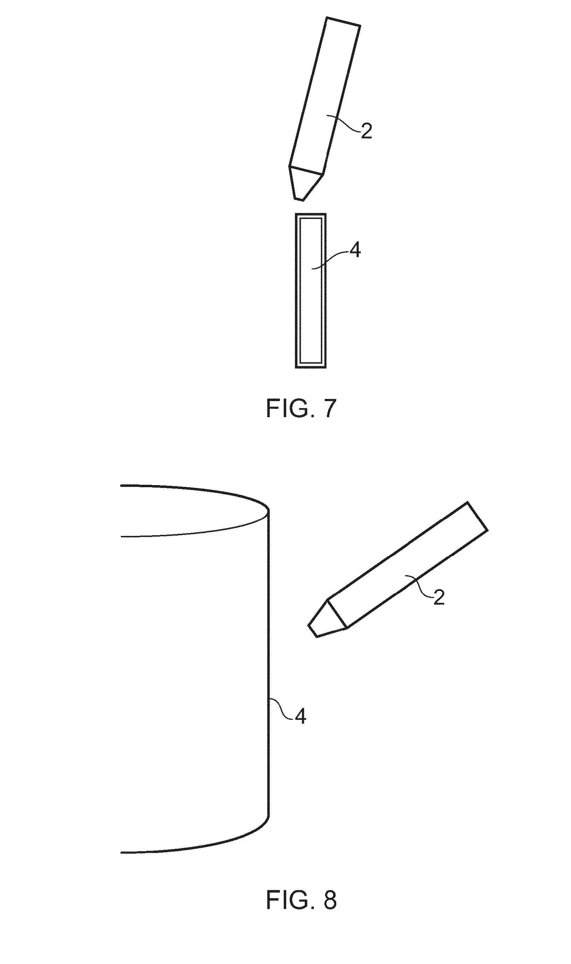

Further modifications to the machining process can be made by angling the jet relative to the leading edge. The angle may be towards the tangent of the leading edge profile as shown in Figure 7 or relative to the length of the leading edge as shown in Figure 8, or both. Through angling the jet tangentially to the leading edge profile the energy distribution of the jet at the point of impact on the leading edge becomes slightly more elliptical which has the benefit of making the Gaussian energy distribution more Poissonian in nature and it is therefore possible to make ellipses with slightly higher ratios.

By angling the jet relative to the leading edge it is possible to reduce the spray caused by atomisation of the jet against the leading edge and this reduces the risk of blocking caused by agglomeration of the particles.

## Claims

1. A method of forming a curved profile of an edge on an aerofoil (4), the curve having a profile axis, the method comprising:
providing an aerofoil having an edge extending along a length;
providing a fluid jet that has a Gaussian energy distribution profile;
traversing the fluid jet along a path that substantially follows the length of the edge to machine an edge having the curved profile, the maximum energy of the fluid jet being directed to a location offset from the profile axis.

2. A method according to claim 1, wherein the Gaussian energy distribution is a normal energy distribution profile.

3. A method according to claim 1 or claim 2, wherein the offset is constant along the length of edge.

4. A method according to any preceding claim, wherein the edge profile transitions into a suction flank at one side and into a pressure surface at the other side and follows an elliptical curve, and wherein the maximum width of the leading edge in a direction perpendicular to the major axis or the ellipse being equal to the length of the minor axis of the ellipse, the offset being greater than or equal to the minor radius of the ellipse.

5. A method according to claim 4, wherein the length of the major axis has a ratio of between 1:1 and 8:1 of the length of the minor axis.

6. A method according to claim 4 or claim 5, wherein the profile axis is the major axis of the ellipse.

7. A method according to claim1, wherein the shape of the edge is determined by the Gaussian energy distribution of the fluid jet and the energy distribution is selected to provide an elliptical leading edge with a ratio of the major axis to the minor axis of 3:1 or more.

8. A method according to any preceding claim, wherein the fluid jet comprises abrasive particles.

9. A method according to claim 8, wherein the abrasive particles are added to the fluid jet at a rate of between 15 and 55 g/min.

10. A method according to claim 9, wherein the abrasive particles are added to the fluid jet at a rate of between 15 and 35 g/min.

11. A method according to claim 4, wherein the fluid jet has an axis that is directed towards a tangent of the ellipse.

12. A method according to claim 11, wherein the angle of the fluid jet axis to the major axis of the ellipse is constant as the fluid jet traverses along the path.

13. A method according to any preceding claim, wherein the traverse of the fluid jet is followed by traverse of a second fluid jet.

14. A method according to claim 13, wherein the maximum energy of the second fluid jet is directed to a location that has a greater offset from the axis than the first fluid jet.

15. A method according to any preceding claim, wherein the edge is a leading edge.

## Patentansprüche

1. Verfahren zum Formen eines gekrümmten Profils einer Kante an einem Tragflügel (4), wobei die Krümmung eine Profilachse aufweist, wobei das Verfahren Folgendes umfasst:
Bereitstellen eines Tragflügels, das eine Kante aufweist, die sich entlang einer Länge ausdehnt;
Bereitstellen eines Flüssigkeitsstrahls, der ein Profil für die Gauß'sche Energieverteilung aufweist;
Wandern des Flüssigkeitsstrahls entlang eines Pfads, der im Wesentlichen der Länge der Kante folgt, um maschinell eine Kante herzustellen, die das gekrümmte Profil aufweist, wobei die maximale Energie des Flüssigkeitsstrahls auf eine Stelle gerichtet ist, die von der Profilachse versetzt ist.

2. Verfahren nach Anspruch 1, wobei die Gauß'sche Energieverteilung ein normales Profil der Energieverteilung ist.

3. Verfahren nach Anspruch 1 oder Anspruch 2, wobei der Versatz entlang der Länge der Kante konstant ist.

4. Verfahren nach einem beliebigen der vorhergehenden Ansprüche, wobei das Kantenprofil auf einer Seite in eine Saugflanke und auf der anderen Seite in eine Druckfläche übergeht und einer elliptischen Krümmung folgt und wobei die maximale Breite der Vorderkante in einer Richtung, die senkrecht zu der Hauptachse verläuft oder die Ellipse der Länge der Nebenachse der Ellipse entspricht, wobei der Versatz größer als der Nebenradius der Ellipse ist oder diesem entspricht.

5. Verfahren nach Anspruch 4, wobei die Länge der Hauptachse ein Verhältnis der Länge der Nebenachse zwischen 1:1 und 8:1 aufweist.

6. Verfahren nach Anspruch 4 oder Anspruch 5, wobei die Profilachse die Hauptachse der Ellipse ist.

7. Verfahren nach Anspruch 1, wobei die Form der Kante von der Gauß'schen Energieverteilung des Flüssigkeitsstrahls bestimmt wird und die Energieverteilung so ausgewählt ist, dass sie eine elliptische Vorderkante mit einem Verhältnis der Hauptachse zu der Nebenachse von 3:1 oder mehr bereitstellt.

8. Verfahren nach einem beliebigen der vorhergehenden Ansprüche, wobei der Flüssigkeitsstrahl abrasive Partikel umfasst.

9. Verfahren nach Anspruch 8, wobei die abrasiven Partikel zu dem Flüssigkeitsstrahl mit einem Anteil von zwischen 15 und 55 g/min hinzugefügt werden.

10. Verfahren nach Anspruch 9, wobei die abrasiven Partikel zu dem Flüssigkeitsstrahl mit einem Anteil von zwischen 15 und 35 g/min hinzugefügt werden.

11. Verfahren nach Anspruch 4, wobei der Flüssigkeitsstrahl eine Achse aufweist, die auf eine Tangente der Ellipse gerichtet ist.

12. Verfahren nach Anspruch 11, wobei der Winkel der Achse des Flüssigkeitsstrahls zu der Hauptachse der Ellipse konstant ist, während der Flüssigkeitsstrahl entlang des Pfads wandert.

13. Verfahren nach einem beliebigen der vorhergehenden Ansprüche, wobei auf die Traverse des Flüssigkeitsstrahls die Traverse eines zweiten Flüssigkeitsstrahls folgt.

14. Verfahren nach Anspruch 13, wobei die maximale Energie des zweiten Flüssigkeitsstrahls auf eine Stelle gerichtet ist, die einen größeren Versatz von der Achse aufweist als der erste Flüssigkeitsstrahl.

15. Verfahren nach einem beliebigen der vorhergehenden Ansprüche, wobei die Kante eine Vorderkante ist.

## Revendications

1. Une méthode de formation d'un profil arrondi d'un bord sur une voilure (4), la courbe possédant un axe de profil, la méthode comprenant :
la fourniture d'une voilure possédant un bord s'étendant le long d'une longueur ;
la fourniture d'un jet de fluide présentant un profil de distribution d'énergie gaussienne ;
le déplacement du jet de fluide le long d'un chemin suivant substantiellement la longueur du bord afin d'usiner un bord au profil arrondi, l'énergie maximale du jet de fluide étant dirigée vers un emplacement déporté par rapport à l'axe du profil.

2. Une méthode selon la revendication 1, la distribution de l'énergie gaussienne étant un profil normal de distribution de l'énergie.

3. Une méthode selon la revendication 1 ou la revendication 2, le déport étant constant sur la longueur du bord.

4. Une méthode selon une quelconque des revendications précédentes, le profil du bord effectuant une transition dans un flanc d'aspiration, sur un côté, puis dans une surface de pression, de l'autre côté, et suit une courbe elliptique, la largeur maximale du bord d'attaque dans la direction perpendiculaire à l'axe principal ou à l'ellipse est égale à la longueur de l'axe mineur de l'ellipse, le déport étant supérieur ou égal au rayon mineur de l'ellipse.

5. Une méthode selon la revendication 4, dans laquelle la longueur de l'axe principal présente un ratio compris entre 1/1 et 8/1 de la longueur de l'axe auxiliaire.

6. Une méthode selon la revendication 4 ou la revendication 5, l'axe du profil étant l'axe principal de l'ellipse.

7. Une méthode selon la revendication 1, dans laquelle la forme du bord est déterminée par la distribution d'énergie gaussienne du jet de fluide, et la distribution de l'énergie est sélectionnée de façon à présenter un bord d'attaque elliptique, avec un ratio entre l'axe principal et l'axe auxiliaire égal à 3/1 ou davantage.

8. Une méthode selon une quelconque des revendications précédentes, le jet de fluide comprenant des particules abrasives.

9. Une méthode selon la revendication 8, les particules abrasives étant ajoutées au jet de fluide avec un débit compris entre 15 et 55 g/min.

10. Une méthode selon la revendication 9, les particules abrasives étant ajoutées au jet de fluide avec un débit compris entre 15 et 35 g/min.

11. Une méthode selon la revendication 4, l'axe du jet de fluide étant dirigé vers une tangente de l'ellipse.

12. Une méthode selon la revendication 11, l'angle de l'axe du jet de fluide avec l'axe principal de l'ellipse étant constant lorsque le jet de fluide se déplace le long du chemin.

13. Une méthode selon une quelconque des revendications précédentes, le déplacement du jet de fluide étant suivi par le déplacement d'un deuxième jet de fluide.

14. Une méthode selon la revendication 13, l'énergie maximale du deuxième jet de fluide étant dirigée vers un emplacement présentant un déport supérieur par rapport à celui du premier jet de fluide.

15. Une méthode selon une quelconque des revendications précédentes, le bord étant un bord d'attaque.
